Europäisches Patentamt

**European Patent Office**

Office européen des brevets

(19)

(11) Veröffentlichungsnummer: **0 096 303**
**B1**

(12) **EUROPÄISCHE PATENTSCHRIFT**

(45) Veröffentlichungstag der Patentschrift:
**27.11.85**

(51) Int. Cl.⁴: **E 21 D 15/44**

(21) Anmeldenummer: **83105216.2**

(22) Anmeldetag: **26.05.83**

(54) **Druckbegrenzungsventil.**

(30) Priorität: **03.06.82 DE 3220846**
**23.04.83 DE 3314837**

(43) Veröffentlichungstag der Anmeldung:
**21.12.83 Patentblatt 83/51**

(45) Bekanntmachung des Hinweises auf die Patenterteilung:
**27.11.85 Patentblatt 85/48**

(84) Benannte Vertragsstaaten:
**BE FR GB**

(56) Entgegenhaltungen:
**AT - B - 226 177**
**DE - B - 1 303 157**
**DE - U - 7 811 107**
**US - A - 3 482 594**

(73) Patentinhaber: **Dams, Jörn, Holthauser Strasse 2,**
**D-4320 Hattingen-Holthausen (DE)**

(72) Erfinder: **Dams, Jörn, Holthauser Strasse 2,**
**D-4320 Hattingen-Holthausen (DE)**

(74) Vertreter: **Eichelbaum, Lambert, Dipl.-Ing.,**
**Michaelstrasse 4, D-4350 Recklinghausen 2 (DE)**

ACTORUM AG

## Beschreibung

Die Erfindung betrifft ein Druckbegrenzungsventil mit einem innerhalb einer Längsbohrung eines Ventilgehäuses entlang eines in einer umlaufenden Ringnut eingelegten O-Ringes bis zu einem Anschlag verschieblichen und mit einem Anschlagbund versehenen Ventilkolben, der bei Erreichen bzw. Überschreiten eines vorgegebenen Soll-Einstelldruckes entgegen der Kraft einer Feder oder eines Federsystems axial verschiebbar ist und Druckflüssigkeit von einer Eingangsseite des Gehäuses durch eine in ihm angeordnete Axialbohrung und mehrere in etwa gleicher Höhe davon abzweigende Radialbohrungen zu einer Ausgangsseite des Ventilgehäuses durchströmen lässt und der bei Erreichung bzw. Unterschreitung des vorgegebenen Soll-Einstelldruckes unter der Wirkung der Feder oder des Federsystems in seine Schliessstellung zurückschiebbar ist.

Druckbegrenzungsventile dieser oder ähnlicher Art werden vornehmlich zur Absicherung von Eck- oder Kappenanstellzylindern von im Bergbau verwendeten Hydrauliksystemen verwendet. Nach den Betriebsempfehlungen für den Steinkohlenbergbau wird unter anderem an derartige Druckbegrenzungsventile die Forderung gestellt, dass einerseits der Schliessdruck der Ventile innerhalb des ersten Betriebsjahres den Soll-Einstelldruck um maximal 20% unterschreitet und dass andererseits der Öffnungsdruckanstieg kleiner höchstens gleich 150 bar bei einem Durchflussstrom im Bereich von 0 bis 30 l/min beträgt. Diese beiden Forderungen stehen in einem gewissen Gegensatz zueinander, worauf sich je nach der grundsätzlichen Betriebsart der Ventile verschiedene Probleme ergeben. So besteht beispielsweise bei mit mechanischen Federn arbeitenden Druckbegrenzungsventilen die Gefahr, dass zur Sicherstellung der erforderlichen Durchflussmenge innerhalb der geringen Reaktionszeit die Federn auf Block gefahren werden, wodurch sie ermüden und sich damit ihre Kennlinie ändert. Demzufolge können die Sollbedingungen nicht mehr erfüllt werden.

Bei mit Gasfedern arbeitenden Druckbegrenzungsventilen wiederum kann Hydraulikflüssigkeit in den Gasraum eindringen. Dadurch wird die Gasfeder härter und kann zu einer Auflastung des Ventiles führen, was wiederum mit einem unzulässigen Druckanstieg im Ausbau verbunden ist, der zu Deformationen und Zerstörungen im hydraulischen System und in dem davon beaufschlagten Stahlbau führt.

Allgemein darf man sagen, dass eine harte Feder bei kurzem Hub des Ventilkolbens eine hohe Schliesskraft sicherstellt, jedoch auch nur eine geringe Durchflussmenge der Druckflüssigkeit zulässt. Demgegenüber gewährleistet eine weiche Feder zwar einen längeren Hub des Ventilkolbens und damit auch eine grössere Durchflussmenge der Druckflüssigkeit, jedoch haftet ihr dann der Nachteil einer grösseren Baulänge und einer geringeren Schliesskraft an.

Ausserdem besteht bei beiden vorerläuterten Ventilarten zur Sicherstellung einer grossen Durchflussmenge der Druckflüssigkeit innerhalb einer relativ kurzen Zeiteinheit die Gefahr, dass der vom Ventilkolben zur Freigabe eines Durchströmquerschnittes zu überfahrende O-Ring vom harten Strahl der Druckflüssigkeit buchstäblich aufgesägt und damit zerstört wird. Dann ist das Ventil funktionsunfähig.

Bei einem bekannten Druckbegrenzungsventil der eingangs genannten Art (nach der US-A Nr. 3548867) und dessen prioritätsbegründenden Gegenstand gemäss der DE-A Nr. 1750834) ist die Axialbohrung durchgehend gestaltet und wird an ihrem der Ausgangsseite des Ventilgehäuses zugeordneten Ende von der Dichtfläche eine Druckkörpers abgedichtet, der einer zylindrischen Schraubenfeder als Stützfläche dient. Bei einem Druckanstieg der Druckflüssigkeit auf der Eingangsseite des Ventilgehäuses wird der Ventilkolben soweit verschoben, bis sein Anschlagbund gegen den Anschlag im Ventilgehäuse fährt. Dabei überfahren die Radialöffnungen den O-Ring, so dass Druckflüssigkeit durch die Axialbohrung und die Radialbohrungen zur Ausgangsseite des Ventilgehäuses durchströmen kann. Bei einem weiteren Druckanstieg wird auch der Druckkörper und damit seine Dichtfläche vom Ende der Axialbohrung abgehoben, so dass auch noch zusätzlich aus dieser Axialbohrung Druckflüssigkeit austreten kann. Dieses Druckbegrenzungsventil ist mit dem Nachteil behaftet, dass einerseits ein relativ langer Hub von der Schliessstellung bis zur Öffnungsstellung des Ventilkolbens erforderlich ist und dass andererseits die auf den Druckkörper einwirkende Feder auf Block zusammenpressbar ist. Letzteres führt hinsichtlich der Feder zu Ermüdungserscheinungen und zu einer Änderung ihrer Kennlinie, während der relativ lange Hub eine weichere Feder mit dem Nachteil einer geringeren Schliesskraft erfordert. Zudem steigt der Druck in der dem O-Ring aufnehmenden Ringnut schlagartig beim Überfahren der Radialöffnungen des Ventilkolbens an, wodurch der O-Ring von dem harten, aus den Radialöffnungen austretenden Druckflüssigkeitsstrahl geradezu zersägt wird.

Da ausserdem der relativ lange Hub bezüglich der maximal pro Zeiteinheit austretenden Druckflüssigkeit mit einer Zeitkomponente behaftet ist, kann infolge der dadurch verlängerten Schaltzeit des Ventiles ein zum Knicken des Stahlbausystems führende Auflastung erfolgen.

Bei einem bekannten Druckbegrenzungsventil ähnlicher Art (nach der DE-A Nr. 2832964) wird der Ventilkolben an einem Ende über einen Ventilteller von einer zylindrischen Schraubenfeder und an seinem anderen Ende über eine zylindrische Hülse von einer zweiten Feder beaufschlagt. Die beiden Federn arbeiten gegeneinander, wodurch mit Absinken der Federkraft der einen Feder sich die Federkraft der anderen Feder erhöht und umgekehrt. Die Hülse liegt lose an dem ihr zugekehrten Ende des Ventilkolbens an. Sobald diese Kontaktstelle zwischen Hülse und Ventilkolben die O-Ring-Dichtung im Ventilgehäuse überfahren hat, wird die Hülse an einem Ringbund zurückgehalten, wohingegen der Ventilkolben unter dem Druck der Druckflüssigkeit die zylindrische Schraubenfeder noch stärker zusammenpresst, bis ein Spalt zwischen den beiden zuvor in Kontakt befindlichen Stirnseiten von Hülse und Ende des Ventilkolbens entsteht.

Durch diesen Spalt kann Druckflüssigkeit in die radial einmündenden Austrittsöffnungen austreten. Bei schlagartigen Belastungen kann der Ventilkolben die zylindrische Schraubenfeder auf Block zusammenpressen, wodurch letztere weich wird, ihre Kennlinie und damit auch den Soll-Einstelldruck ändert. Zwar kann über das verstellbare Widerlager der zylindrischen Schraubenfeder eine Nachjustierung vorgenommen werden, die jedoch mit dem Nachteil einer noch rascheren Blockpressung und einer erneuten Änderung der Federkennlinie behaftet ist.

Im Augenblick der Öffnung dieses Druckbegrenzungsventiles wirkt auf den Ventilkolben lediglich die zylindrische Schraubenfeder. Zur Erzielung des erforderlichen Schliessdruckes muss demzufolge diese Einzelfeder entsprechend hart ausgebildet werden. Das aber wiederum ist mit dem Nachteil einer nur geringen Durchflussmenge durch den Spalt zwischen Hülse und Ende des Ventilkolbens behaftet.

Bei einem Druckbegrenzungsventil anderer Art (nach der DE-A Nr. 2815919) ist der letztbeschriebene Spalt zwischen der Hülse und dem Ventilkolben durch einen noch kleineren Spalt zwischen der Axialbohrung im Ventilkörper und einem Dichtkegel ersetzt worden. Dieses Druckbegrenzungsventil weist ausser den vorgenannten Nachteilen einen noch geringeren Durchströmquerschnitt und damit eine noch geringere Durchflussmenge pro Zeiteinheit auf.

Bei einem Druckbegrenzungsventil anderer Art (nach dem DE-U Nr. 7811107) taucht der Ventilkolben mit einem Ende in einen mit Stickstoff gefüllten Gasraum des Ventilgehäuses ein. Dabei neigt die Dichtung im Ventilgehäuse zwischen den radial einmündenden Austrittsöffnungen und dem Gasraum zu Undichtigkeiten, die mit zunehmendem Verschleiss grosser werden. Dadurch gelangt Druckflüssigkeit in den Gasraum, wodurch die Gasfeder härter wird, was wiederum zu einem unzulässigen Druckanstieg im Ausbau führen kann. Ein Härterwerden der Gasfeder ist bei einem Druckbegrenzungsventil unmittelbar auch mit einem Abfall der Auslassmenge der Druckflüssigkeit pro Zeiteinheit verbunden, wodurch sich das Ventil — zumindest kurzzeitig — im Hinblick auf die auf ihn einwirkenden Aussenkräfte als starr erweisen und damit auflasten kann. Ausserdem wird der O-Ring durch den harten Strahl der aus den stufenförmig in Verschieberichtung nachgeordneten Radialbohrungen austretenden Druckflüssigkeit buchstäblich zersägt. Eine Zerstörung des O-Ringes wiederum führt zur unmittelbaren Funktionsunfähigkeit des gesamten Druckbegrenzungsventiles.

Ferner ist aus der DE-A Nr. 2408106 ein weiteres Druckbegrenzungsventil anderer Art bekannt, das aus einer Vielzahl von Einzelteilen, einem kompliziert ausgebildeten Ventilkolben und einem Steuerkolben besteht. Der Ventilkolben wird über einen Schraubstopfen und einen Ventilteller von einer zylindrischen Schraubenfeder beaufschlagt, wobei die bereits zur US-PS Nr. 3548867 sowie zur DE-A Nr. 2832964 getroffenen Ausführungen hierauf in gleicher Weise zutreffen.

Und schliesslich ist nach der FR-A Nr. 1493612 ein Membranventil anderer Art bekannt, bei dem eine Zusammenpressung der Feder durch eine mit einem Anschlagbund versehene, konzentrisch zwischen den Federn angeordnete Führungsstange verhindert wird. Ein solches Hub-Begrenzungssystem für die Federn lässt sich nicht oder nicht ohne weiteres auf die vorstehend beschriebenen Druckbegrenzungsventile übertragen. Bei einer Übertragung muss zur Verhinderung des Herausfallens des Ventilkolbens sein Aussendurchmesser gegenüber dem Durchströmquerschnitt an der Eingangsseite des Ventilgehäuses vergrössert werden. Das ist neben einer komplizierten Fertigung mit einer Drosselung der Hydraulikflüssigkeit an der letztgenannten Stelle verbunden.

Von diesem Stand der Technik ausgehend liegt der Erfindung die Aufgabe zugrunde, ein Druckbegrenzungsventil der eingangs genannten Gattung zu schaffen, welches einerseits bei einem äusserst kurzen Hub des Ventilkolbens grosse Durchflussmengen der Druckflüssigkeit bei der zulässigen Überschreitung des Soll-Einstelldruckes gewährleistet und welches andererseits eine lange Lebensdauer des O-Ringes und damit eine lange Funktionssicherheit des Ventiles sicherstellt.

Diese Aufgabe wird in Verbindung mit dem eingangs genannten Gattungsbegriff erfindungsgemäss durch die Kombination folgender Merkmale gelöst:

a) Die Axialbohrung endet in an sich bekannter Weise als Sackloch etwa in Höhe der Radialbohrungen,

b) in der Schliessstellung des Ventiles überschneidet die der Eingangsseite zugekehrte Vorderkante der Ringnut die Austrittsöffnungen der Radialbohrungen, und

c) die Feder oder das Federsystem weist eine flache Kennlinie auf.

Durch das Merkmal a) in Verbindung mit dem Merkmal b) wird der O-Ring vorgespannt und presst sich demzufolge wie eine plastische Masse, jedoch elastisch, in der Nähe der Hinterkante der Ringnut. Dadurch wird in Verbindung mit dem Merkmal c) bei einem optimal geringen Hub in der einen Richtung eine momentane grosse Öffnung und in der anderen Richtung trotz der flachen Federkennlinie eine hohe Schliesskraft des Ventiles erreicht. Durch diese im Prinzip mehrstufige Entspannung wird aufgrund des geringen Gesamthubes von der Schliessstellung bis zur vollständigen Öffnungsstellung eine zwar weiche, dennoch blitzschnelle Druckentlastung sichergestellt. In Versuchen hat sich herausgestellt, dass ein so beschaffenes Ventil eine Durchlassmenge bis zu 60 l/min gewährleisten kann, obgleich nach den Betriebsempfehlungen für den Steinkohlenbergbau nur maximal 30 l/min gefordert werden. Fer-

ner konnte überraschend festgestellt werden, dass selbst nach 45000 Schaltungen der O-Ring an seinen den Austrittsöffnungen der Radialbohrungen zugekehrten Flächenbereichen keine Abnutzungserscheinungen aufwies. Abnutzungserscheinungen waren lediglich an denjenigen Stellen des O-Ringes festzustellen, die mit den durchgehenden Wandbereichen zwischen zwei benachbarten Austrittsöffnungen der Radialbohrungen Reibkontakt hatten. Dieser Reibkontakt rührt nach grundsätzlichen Festellungen aufgrund mehrerer Versuchsreihen daher, dass eine schmale, filmartige Nase des O-Ringes in den aufgrund der Gleitpassung zwischen Ventilkolben und Gehäuse erforderlichen Spalt hineingepresst wird und dort eine entsprechend hohe Friktion erfährt. Jedoch wurde entgegen den ursprünglich gehegten Befürchtungen der Fachleute durch die Vorspannung des O-Ringes aufgrund des Merkmales b) kein Verschleiss des O-Ringes in unmittelbarer Nähe der Austrittsöffnungen der Radialbohrungen festgestellt, vielmehr ein Ausweichen und damit eine Ausweichmöglichkeit der unmittelbar an diesen Austrittsöffnungen anliegenden O-Ring-Flächenbereiche.

Nach einer vorteilhaften Weiterbildung der Erfindung reicht in der Schliessstellung des Ventiles der äusserste Kantenbereich der Austrittsöffnungen der Radialbohrungen maximal bis zur Mitte des vorgespannten O-Ringes. Erst bei Überschreitung dieser Mitte des vorgespannten, elastischen O-Ringes erfolgt ein Flüssigkeitsdurchlass. Dadurch kann der Hub des Ventilkolbens von seiner Schliessstellung bis zur ersten gewollten Undichtigkeit noch kleiner getaltet werden. Vorteilhaft beträgt der Hub des Ventilkolbens von seiner Schliessstellung bis zur Undichtigkeit ca. nur 1 mm und bis zu seiner vollen Öffnungsstellung etwa 3,5 mm. Als Grösse der Gleitpassung zwischen Ventilkolben und Zylinderwand hat sich die Passung h 7/H 7 zuzüglich der entsprechenden Verschleissaufmasse der zur dieser Passung gehörenden Lehren als besonders vorteilhaft erwiesen. Üblicherweise lässt eine Passung h 7/H 7 zwischen zwei Teilen keine oder nur sehr schwer eine Relativbewegung zu. Zuzüglich der entsprechenden Verschleissaufmasse der zu der genannten Passung gehörenden Lehren konnte eine, sämtliche Anforderungen erfüllende Gleitpassung erzielt werden. Dabei wird vorteilhaft die Durchtrittsöffnung für den Ventilkolben im Ventilgehäuse mit einer die Durchtrittsöffnung trichterförmig erweiternden Randfase versehen. Diese Randfase kann sowohl 0,5 mm × 90° als auch 0,5 mm × 120° gestaltet sein. Die Wanddicke zwischen der der Ausgangsseite des Ventilgehäuses zugekehrten Hinterkante der Ringnut und de sich trichterförmig erweiternden Randfase beträgt zwischen 1,0 und 0,5 mm.

Zur Sicherstellung einer grossen Durchflussmenge durch den Ventilkolben ist das Verhältnis der Querschnittsfläche seiner Axialbohrung zur Summe der Querschnittsfläche seiner Radialbohrungen etwa 2:1. Unter Beachtung dieses Verhältnisses werden beispielsweise bei einem Ventilkolben mit einer Axialbohrung von 4 mm acht Radialbohrungen mit einem Durchmesser von 1,0 bis 1,2 mm vorgesehen, wobei der Ventilkolben einen Aussendurchmesser von 5 mm aufweist.

Ein Ausführungsbeispiel der Erfindung ist in den Zeichnungen dargestellt. Dabei zeigen:

Fig. 1: einen Längsschnitt durch das neue Druckbegrenzungsventil,

Fig. 2: den Ventilkolben und die angrenzenden Ventilgehäuseteile in einer Ausschnittsvergrösserung von Fig. 1,

Fig. 3: eine Teilansicht von Fig. 1 in Höhe des O-Ringes in vergrösserter Darstellung bei vorgespanntem O-Ring, und

Fig. 4: einen Schnitt entlang der Linie IV-IV von Fig. 2.

Das neue Druckbegrenzungsventil 1 beseht im wesentlichen aus einem Ventilgehäuse 2, einem Ventilkolben 3, einer Ventilfeder 4 und einer Federkammer 5. Innerhalb der Längsbohrung 6 im Ventilgehäuse 2 befindet sich in einer umlaufenden Ringnut 7 ein eingelegter O-Ring 8. Der Ventilkolben 3 weist an seinem offenen Ende 3' einen Anschlagbund 9 auf, dessen Kante 9' einen maximalen Hub H des Ventilkolbens 3 bis zum Anschlag 10 des Ventilgehäuses 2 zulässt.

Das Ventilgehäuse 2 ist über ein Aussengewinde 11 mit einem Innengewinde 12 der Federkammer 5 verschraubt und mittels der Dichtung 13 zueinander druckflüssigkeitsdicht abgedichtet. Die Federkammer 5 ist mit mehreren Radialöffnungen 14 und einer Axialöffnung 15 versehen. Die Axialöffnung 15 befindet sich innerhalb einer Mutter 16 und einer Imbusschraube 17, über welche die Feder 4 vorgespannt werden kann. Die Feder 4 stützt sich mit ihrem einen Ende 4' gegen einen über die Imbusschraube 17 verstellbaren Federteller 18 und mit ihrem anderen Ende 4" gegen einen zweiten Federteller 19 ab. Der Federteller 19 ist mit einer Durchflussbohrung 20 und an seiner Unterseite mit einer kegelförmigen Anlagefläche 21 versehen, an welcher das halbkugelförmig ausgebildete Ende 3" des Ventilkolbens 3 anliegt. Der Ventilkolben 3 weist eine relativ weite Axialbohrung 22 auf, die in einem Sackloch 23 endet. Unterhalb des Sackloches 23 zweigen von der Axialbohrung 22 im vorliegenden Fall insgesamt acht Radialbohrungen 24 ab.

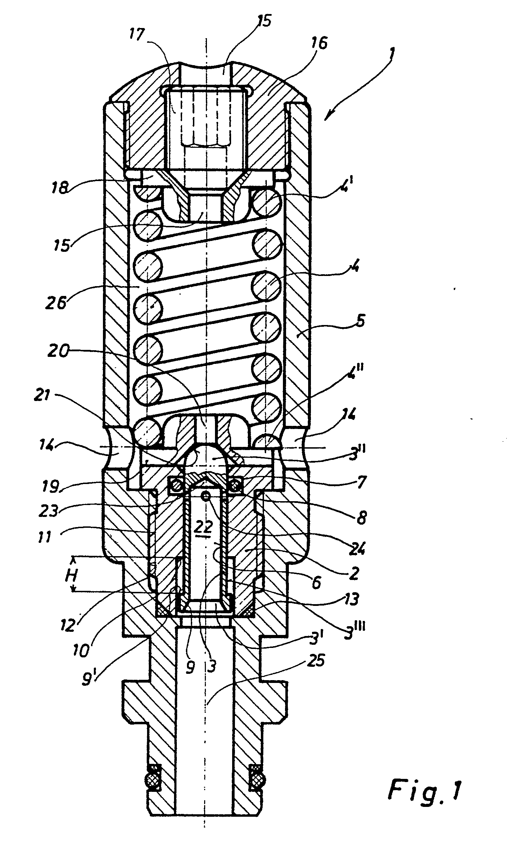

Bei Erreichen bzw. Überschreiten eines vorgegebenen Soll-Einstelldruckes wird der Ventilkolben 3 von der Eingangsseite 25 des Gehäuses in seiner in Fig. 1 dargestellten Lage von Druckflüssigkeit beaufschlagt. Da der O-Ring 8 in dieser Lage die Längsbohrung 6 des Ventilgehäuses 2 gegenüber der Aussenwandung 3''' des Ventilkolbens 3 abdichtet, wird bei steigendem Druck der Ventilkolben 3 angehoben. Dabei überfahren die Radialbohrungen 24 den O-Ring 8, so dass Druckflüssigkeit aus den Radialbohrungen 24 zur Ausgangsseite 26 des Ventilgehäuses 2 ausströmen kann, die im vorliegenden Fall vom Innenraum der Federkammer 5 gebildet wird. Von dieser Ausgangsseite 26 gelangt die abströmende Flüssigkeit über mehrere, hier zum Beispiel vier, Radialöffnungen 14 und die Axialöffnungen 15 ins Freie. Dadurch sinkt der Druck der Druckflüssigkeit an der Eingangsseite 25. Bei Erreichung bzw. Unterschreitung des vorgegebenen Soll-Einstelldruckes drückt die Feder 4 über den Federteller 19 den Ventilkolben 3 an seinem anliegenden Ende 3″ in Richtung auf die Eingangsseite 25, bis die Radialbohrungen 24 erneut den O-Ring 8 überfahren haben und eine erneute Dichtung zwischen der Längsbohrung 6 im Ventilgehäuse 2 und der Aussenwandung 3‴ des Ventilkolbens 3 vorhanden ist.

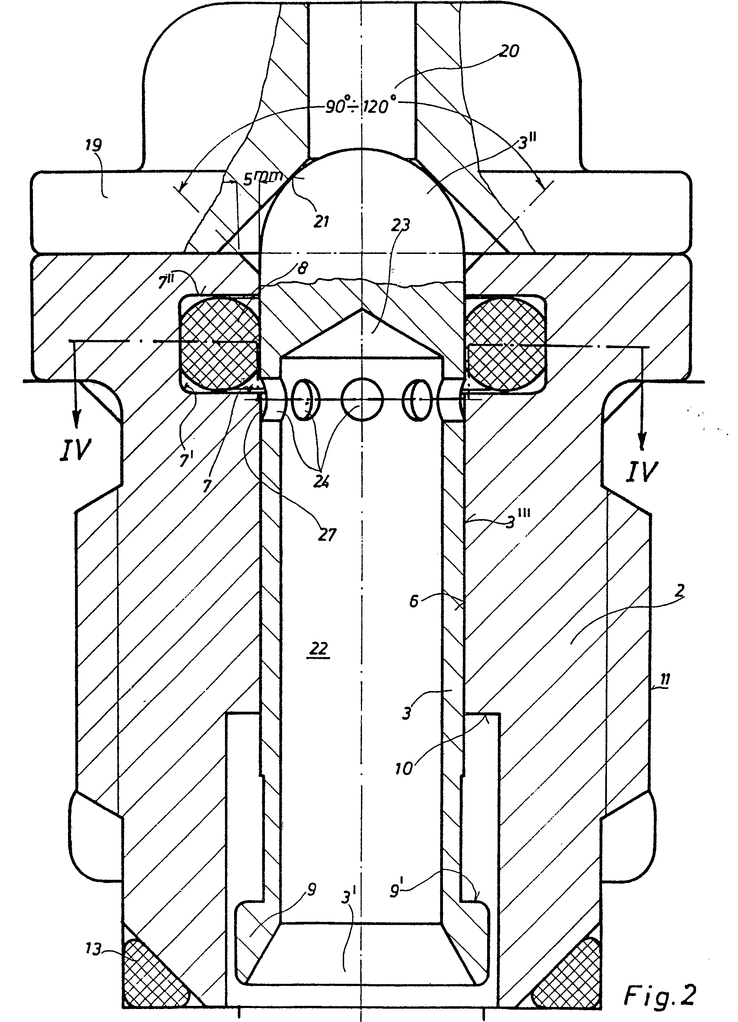

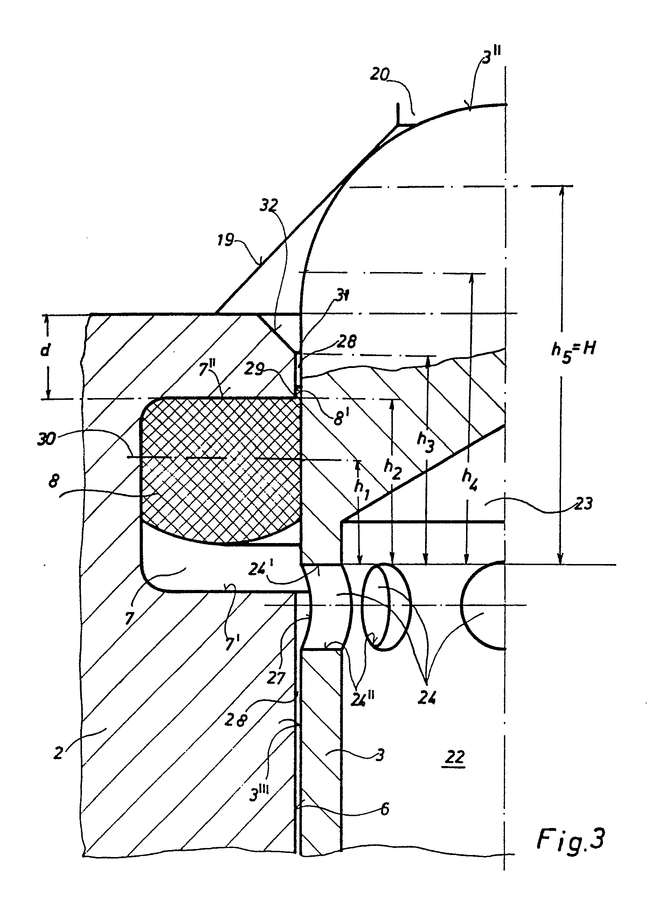

Das Ventilgehäuse 2 und der Ventilkolben 3 sind in den Fig. 2 und 3 in vergrösserter Darstellung gezeigt, wobei mit der Fig. 1 übereinstimmende Teile mit gleichen Bezugsziffern versehen sind. Die Axialbohrung 22 des Ventilkolbens 3 endet in an sich bekannter Weise als Sackloch 23 etwa in der Höhe der Radialbohrungen 24. Neu ist jedoch, dass in der dargestellten Schliessstellung des Ventiles 1 die der Eingangsseite 25 zugekehrte Vorderkante 7′ der Ringnut 7 die Austrittsöffnung 27 der Radialbohrungen 24 überschneidet. Dadurch steht der Innenraum der Ringnut 7 ständig unter dem vollen Druck der Druckflüssigkeit, der beispielsweise bis zu 600 bar betragen kann. Infolgedessen verformt sich der in Fig. 2 drucklos dargestellte O-Ring 8 wie eine plastische Masse gemäss der Darstellung von Fig. 3. In Fig. 3 ist ausserdem der Spalt 28 ersichtlich, der aufgrund der Gleitpassung zwischen der Aussenwandung 3‴ des Ventilkolbens 3 und der Längsbohrung 6 im Ventilgehäuse 2 vorhanden sein muss. Da sich der O-Ring 8 unter dem Druck der Druckflüssigkeit – wie in Fig. 3 dargestellt – wie eine plastische Masse verhält, dringt er auch mit einem dünnen Film 8′ in den Spalt 28 ein. Um dieses nachteilige, jedoch bei keinem O-Ring der hier in Rede stehenden Art vermeidbare Eindringen möglichst gering zu halten, wird vorteilhaft die an dieser Stelle gelegene Kante 29 der Ringnut 7 scharfkantig ausgebildet und der Spalt 28 möglichst klein gehalten. Denn mit grösser werdendem Film 8′ wird die Friktion zwischen der Längsbohrung 6 des Ventilgehäuses 2 und der Aussenwandung 3‴ des Ventilkolbens 3 erhöht. Um ein solches Eindringen eines Filmes 8′ möglichst kurzzeitig auftreten zulassen, wurden bei sämtlichen Druckbegrenzungsventilen der hier in Rede stehenden Art die Radialbohrungen 24 in der Schliessstellung des Ventiles 1 deutlich unterhalb der Nut 7 angeordnet. Damit verbunden war offensichtlich die Hoffnung der Konstrukteure, dass aufgrund des Druckverlustes im Spalt 28 der O-Ring 8 erst dann eine nachteilige Verformung in Form des Filmes 8′ erfuhr, wenn die Austrittsöffnungen 27 der Radialbohrungen 24 die Vorderkante 7′ der Ringnut 7 erreichten. Erfindungsgemäss wird nun genau das Gegenteil gemacht, nämlich dass in der Schliessstellung des Ventiles 1 die der Eingangsseite 25 zugekehrte Vorderkante 7′ der Ringnut 7 die Austrittsöffnungen 27 der Radialbohrungen 24 überschneidet. Gleichwohl haben sich die Befürchtungen hinsichtlich eines frühzeitigen Verschleisses des O-Ringes 8 nicht bestätigt, vielmehr war dieser O-Ring 8 selbst nach 45 000 Hüben noch voll funktionsfähig. Zugleich wurde mit der vorstehend beschriebenen Anordnung der unvergleichliche Vorteil eines optimalen kurzen Hubes h von der Schliesstellung bis zum Undichtwerden bzw. zur vollen Öffnung des Ventiles erreicht. Die Mitte des O-Ringes 8 in Fig. 3 soll durch die Linie 30 gekennzeichnet sein. Dann vollzieht sich die Entlastung des Ventiles im wesentlichen in fünf unterschiedlich grossen Hüben h der Entspannung. Sobald der äusserste Kantenbereich 24′ der Austrittsöffnungen 27 der Radialbohrungen 24 die Mittellinie 30 des vorge-spannten O-Ringes 8 überschreitet, tritt eine erste Undichtigkeit und damit die erste Entspannungsphase des Ventiles ein. Dieser Hub ist mit $h_1$ be-zeichnet. Erreicht der äusserste Kantenbereich 24′ der Radialbohrungen 24 etwa die Hinterkante 7″ der Ringnut 7 tritt eine weitere Entspannung ein. Zugleich tritt auch eine Entlastung des Filmes 8′ ein, der in die Öffnung 27 hineinexpandieren kann. Aus diesem Grunde wurden auch nicht wie bisher beim Stand der Technik vier sondern acht Radialbohrungen 24 angeordnet. Befürchtungen, dass der Film 8′ und damit auch der O-Ring 8 durch die nachrückende Unterkante 24″ der Radialöffnungen 24 abgeschert werden könnte, haben sich nicht bestätigt. Sobald der äusserste Kantenbereich 24′ der Radialbohrungen 24 die Kante 31 der Randfase 32 erreicht, tritt bei dem Hub $h_3$ die dritte Entspannungsphase ein. In dieser Stellung des Ventilkolbens 3 gilt das Ventil noch nicht als voll geöffnet. Dabei beträgt der Hub $h_1$ von der Schliessstellung des Ventiles bis zur Undichtigkeit ca. 1 mm, der Hub $h_2$ ca. 2 mm und der Hub $h_3$ ca. 2,5 mm. Erst beim Hub $h_4$ von 3,5 mm gilt das Ventil als voll geöffnet. Beim weiteren Hub $h_5 = H = 4,5$ mm gelangt die Anschlagkante 9′ des Anschlagbundes 9 des Ventilkolbens 3 gegen die Anschlagkante 10 des Ventilgehäuses 2. Ab dem Hub $h_4$ können bei einem Druck von 420 bar über die Axialbohrung 22 und die acht Radialbohrun-gen 24 etwa 60 l/min der Druckflüssigkeit ausströ-men.

Sobald die Unterkante 24″ der Radialbohrungen 24 die Hinterkante 7″ der Ringnut 7 auf dem Wege zur vollen Schliessöffnung überfährt, bildet sich der Film 8′ des O-Ringes 8 erneut.

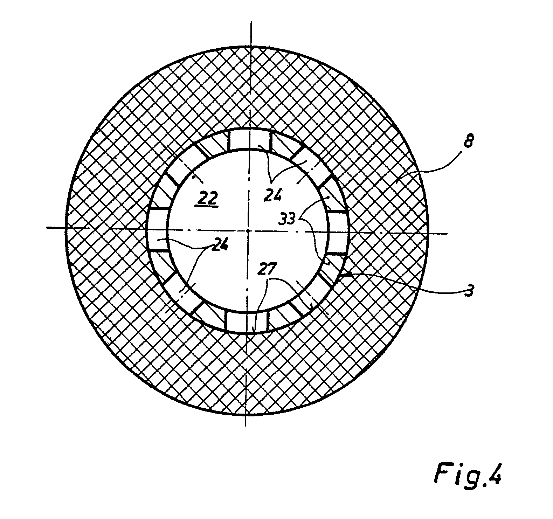

Wie aus Fig. 4 in Verbindung mit Fig. 2 entnommen werden kann, ist in Höhe der Radialbohrungen 24 die Länge der geöffneten Umfangslinie grösser als die Länge der geschlossenen Umfangs-linie zwischen den einzelnen Radialbohrungen 24. Aufgrund der insgesamt acht Radialbohrungen 24, der relativ grossen Axialbohrung 22 und des geringen Hubes $h_5$ von höchstens 4,5 mm erfolgt innerhalb einer kurzen Schaltzeit eine ausgezeichnete Entspannung der Druckflüssigkeit auf der Eingangsseite 25. Ferner wird der O-Ring 8 gegenüber dem Stand der Technik geringer belastet, da gemäss Fig. 4 in Höhe der Radialbohrungen 24 der Film 8′ des O-Ringes 8 eine Entlastung erfährt, weil die Umfangslinie der Radialöffnungen 24 in diesem Bereich länger als die Umfangslinie der Summe der dazwischen befindlichen Stege 33 ist.

Besonders vorteilhaft wird das neue aus dem Ventilgehäuse 2, dem Ventilkolben 3, dem O-Ring 8, dem Federteller 19 und der Feder 4 bestehende Ventil als kompakte Baugruppe bei unterschiedlichen Ventilarten und Anwendungsbereichen eingesetzt. Dabei weist der O-Ring 8 vorteilhaft eine Shore-Härte A von mindestens 100 auf.

«Druckbegrenzungsventil»

*Stückliste*

| | |
|---|---|
| Druckbegrenzungsventil | 1 |
| Ventilgehäuse | 2 |
| Ventilkolben | 3 |
| Enden des Ventilkolbens | 3', 3'' |
| Wandung des Ventilkolbens | 3''' |
| Ventilfeder | 4 |
| Enden der Ventilfeder | 4', 4'' |
| Federkammer | 5 |
| Längsbohrung im Ventilgehäuse 2 | 6 |
| Ringnut | 7 |
| O-Ring | 8 |
| Film des O-Ringes 8 | 8' |
| Anschlagbund des Ventilkolbens | 9 |
| Kante des Anschlagbundes | 9' |
| Gesamthub | $H, h_5$ |
| Hübe | $h_1, h_2, h_3, h_4$ |
| Anschlag am Gehäuse 2 | 10 |
| Außengewinde des Gehäuses 2 | 11 |
| Innengewinde der Federkammer 5 | 12 |
| Dichtung | 13 |
| Radialöffnungen im Ventilkolben 3 | 14 |
| Axialöffnung in Federkammer | 15 |
| Mutter | 16 |
| Imbusschraube | 17 |
| Federteller | 18, 19 |
| Durchflussbohrung | 20 |
| Kegelförmige Anlagefläche | 21 |
| Axialbohrung in Ventilkolben 3 | 22 |
| Sackloch | 23 |
| Radialbohrungen in Ventilkolben 3 | 24 |
| Eingangsseite des Gehäuses 2 | 25 |
| Ausgangsseite des Gehäuses 2 | 26 |
| Austrittsöffnung der Radialbohrungen 24 | 27 |
| Spalt zwischen Gehäuse 2 in Ventilkolben 3 | 28 |
| Scharfe Kante der Ringnut 7 | 29 |
| Mittellinie des O-Ringes 8 | 30 |

| | |
|---|---|
| Kante der Randfase | 31 |
| Randfase des Gehäuses 2 | 32 |
| Stege zwischen Radial-bohrungen 24 | 33 |

## Patentansprüche

1. Druckbegrenzungsventil (1) mit einem innerhalb einer Längsbohrung (6) eines Ventilgehäuses (2) entlang eines in einer umlaufenden Ringnut (7) eingelegten O-Ringes (8) bis zu einem Anschlag(10) verschieblichen und mit einem Anschlagbund (9) versehenen Ventilkolben (3), der bei Erreichen bzw. Überschreiten eines vorgegebenen Soll-Einstelldruckes entgegen der Kraft einer Feder (4) oder eines Federsystems axial verschiebbar ist und Druckflüssigkeit von einer Eingangsseite des Gehäuses durch eine in ihm angeordnete Axialbohrung (22) und mehrere in etwa gleicher Höhe davon abzweigende Radialbohrungen (24) zu einer Ausgangsseite des Ventilgehäuses durchströmen lässt und der bei Erreichung bzw. Unterschreitung des vorgegebenen Soll-Einstelldruckes unter der Wirkung der Feder oder des Federsystems in seine Schliessstellung zurückschiebbar ist, gekennzeichnet, durch die Kombination folgender Merkmale:
    a) die Axialbohrung (22) endet in an sich bekannter Weise als Sackloch (23) etwa in der Höhe der Radialbohrungen (24),
    b) in der Schliessstellung des Ventiles (1) überschneidet die der Eingangsseite (25) zugekehrte Vorderkante (7') der Ringnut (7) die Austrittsöffnungen (27) der Radialbohrungen (24), und
    c) die Feder (4) oder das Federsystem weist eine flache Kennlinie auf.

2. Druckbegrenzungsventil nach Anspruch 1, dadurch gekennzeichnet, dass in der Schliessstellung des Ventiles (1) der äusserste Kantenbereich (24') der Austrittsöffnungen (27) der Radialbohrungen (24) maximal bis zur Mitte (30) des vorgespannten O-Ringes (8) reicht.

3. Druckbegrenzungsventil nach Anspruch 1 oder 2, dadurch gekennzeichnet, dass der Hub ($h_1$) des Ventilkolbens (3) von seiner Schliessstellung bis zur Undichtigkeit ca. 1 mm beträgt.

4. Druckbegrenzungsventil nach den Ansprüchen 1, 2 oder 3, dadurch gekennzeichnet, dass der Hub ($h_4$) des Ventilkolbens (3) von seiner Schliessstellung in seine Öffnungsstellung etwa 3,5 mm beträgt.

5. Druckbegrenzungsventil nach den Ansprüchen 1 bis 4, dadurch gekennzeichnet, dass die Grösse der Gleitpassung zwischen Ventilkolben (3) und Zylinderwand (6) des Gehäuses (2) h 7/H 7 zuzüglich der entsprechenden Verschleissaufmasse der zu der genannten Passung gehörenden Lehren bemessen ist.

6. Druckbegrenzungsventil nach den Ansprüchen 1 bis 5, dadurch gekennzeichnet, dass die Durchtrittsöffnung für den Ventilkolben (3) im Ventilgehäuse (2) mit einer die Durchtrittsöffnung trichterförmig erweiternden Randfase (32) versehen ist.

7. Druckbegrenzungsventil nach Anspruch 6, dadurch gekennzeichnet, dass die Randfase (32) 0,5 mm × 90° gestaltet ist.

8. Druckbegrenzungsventil nach Anspruch 6, dadurch gekennzeichnet, dass die Randfase (32) 0,5 mm × 120° gestaltet ist.

9. Druckbegrenzungsventil nach den Ansprüchen 6 bis 8, dadurch gekennzeichnet, dass die Wanddicke (d) zwischen der der Ausgangsseite (26) des Ventilgehäuses (2) zugekehrten Hinterkante (7'') der Ringnut (7) und der sich trichterförmig erweiternden Randfase (32) zwischen 1,0 und 0,5 mm beträgt.

10. Druckbegrenzungsventil nach den Ansprüchen 1 bis 9, dadurch gekennzeichnet, dass das Verhältnis der Querschnittsfläche der Axialbohrung (22) des Ventilkolbens (3) zur Summe der Querschnittsflächen seiner Radialbohrungen (24) etwa 2:1 ist.

11. Druckbegrenzungsventil nach den Ansprüchen 1 bis 10, dadurch gekennzeichnet, dass der Ventilkolben (3) acht Radialbohrungen (24) aufweist.

12. Druckbegrenzungsventil nach den Ansprüchen 1 bis 11, dadurch gekennzeichnet, dass das Ventilgehäuse (2, 5) mit vier Radialöffnungen (14) und einer Axialöffnung (15) zum Abfluss der Druckflüssigkeit versehen ist.

13. Druckbegrenzungsventil nach den Ansprüchen 1 bis 12, dadurch gekennzeichnet, dass es als kompakte Baugruppe aus dem Ventilgehäuse (2), dem Ventilkolben (3), dem O-Ring (8), dem Federteller (19) und der Feder (4) besteht.

14. Druckbegrenzungsventil nach den Ansprüchen 1 bis 13, dadurch gekennzeichnet, dass der O-Ring (8) eine Shore-Härte von mindestens 100 Shore-A aufweist.


**Claims**

1. Pressure limiting valve (1) with a valve piston (3) which is movable within a longitudinal bore (6) of a valve housing (2) against an O-ring (8), seated in an annular groove (7), up to an abutment (10) and provided with an abutment shoulder (9), which piston, upon attaining or exceeding a predetermined threshold pressure, is axially movable against the force of a spring (4) or a spring system and allows pressurised fluid to flow from an inlet side of the housing, through an axial bore (22) arranged therein and several radial bores (24) branching therefrom at approximately the same height, to an outlet side of the valve housing and which, upon attaining or falling below the predetermined threshold pressure, is returnable under the action of the spring or the spring system to its closing position, characterised by the combination of the following features:

(a) the axial bore (22) ends in a manner known per se in a blind cavity (23) at approximately the height of the radial bores (24),

(b) in the closing position of the valve (1), the front edge (7') of the annular groove (7) facing the inlet side (25) overlaps the discharge openings (27) of the radial bores (24) and

(c) the spring (4) or the spring system has a flat characteristic.

2. Pressure limiting valve according to Claim 1, characterised in that the closed position of the valve (1) the outermost edge region (24') of the discharge openings (27) of the radial bores (24) extends at the most to the middle (30) of the prestressed O-ring (8).

3. Pressure limiting valve according to Claim 1 or 2, characterised in that the stroke ($h_1$) of the valve piston (3) from its closing position to the unsealing condition is about 1 mm.

4. Pressure limiting valve according to Claims 1, 2 or 3, characterised in that the stroke ($h_4$) of the valve piston (3) from its closing position to its opening position is about 3.5 mm.

5. Pressure limiting valve according to Claims 1 to 4, characterised in that the size of the clearance between the valve piston (3) and the cylinder wall (6) of the housing (2) is proportional to h7/H7 plus the corresponding wear allowances of the templates relating to such clearance.

6. Pressure limiting valve according to Claims 1 to 5, characterised in that the opening for the valve piston (3) in the valve housing (2) is provided with a chamfered edge (32) widening the opening into a funnel shape.

7. Pressure limiting valve according to Claims 6, characterised in that the chamfered edge (32) 0.5 mm × 90°.

8. Pressure limiting valve according to Claim 6, characterised in that the chamfered edge (32) measures 0.5 mm × 120°.

9. Pressure limiting valve according to Claims 6 to 8, characterised in that the wall thickness (d) between the rear edge (7'') of the annular groove (7) facing the outlet side (26) of the valve housing (2) and the chamfered edge (32) widening into a funnel shape is between 1.0 and 0.5 mm.

10. Pressure limiting valve according to Claims 1 to 9, characterised in that the ratio of the cross-sectional area of the axial bore (22) of the valve piston (3) to the sum of the cross-sectional areas of its radial bores (24) is about 2:1.

11. Pressure limiting valve according to Claims 1 to 10, characterised in that the valve piston (3) has eight radial bores (24).

12. Pressure limiting valve according to Claims 1 to 11, characterised in that the valve housing (2, 5) is provided with four radial openings (14) and an axial opening (15) for the discharge of pressurised fluid.

13. Pressure limiting valve according to Claims 1 to 12, characterised in that it comprises, as a compact constructional assembly, the valve housing (2), the valve piston (3), the O-ring (8), the spring plate (19) and the spring (4).

14. Pressure limiting valve according to Claims 1 to 13, characterised in that the O-ring (8) has a Shore hardness of at least 100 Shore-A.

## Revendications

1. Soupape de limitation de pression (1) comportant un piston à soupape (3) coulissable jusqu'à une butée (10) dans un alésage longitudinal (6) d'une cage à soupape (2), à l'intérieur d'un joint torique (O-ring) (8) logé dans une rainure annulaire (7), ledit piston à soupape (3) comportant un collet de butée (9) et étant coulissable axialement, contre l'effort d'un ressort (4) ou d'un agencement à effet de ressort, lorsque la pression de consigne prédéterminée est atteinte ou dépassée, et permettant le passage d'un liquide sous pression d'un côté d'admission de la cage vers un côté de sortie de celle-ci, à travers un alésage axial (22) pratiqué dans ladite cage et à travers plusieurs alésages radiaux (24) dérivés à hauteur sensiblement égales dudit alésage axial (22), ledit piston à soupape pouvant être ramené dans sa position de fermeture, lorsque la pression atteinte est égale ou inférieure à la pression de consigne prédéterminée, grâce à l'effet du ressort ou de l'agencement à effet de ressort, caractérisé par la combinaison des caractéristiques suivantes:

a) l'alésage axial (22) se termine de manière connue en soi en trou borgne (23), environ à la hauteur des alésages radiaux (24),

b) en position de fermeture de la soupape (1), l'arête avant (7') de la rainure annulaire (7), arête (7') tournée vers le côté d'admission (25), recouvre les ouvertures de portée (27) des alésages radiaux (24), et

c) le ressort (4) ou l'agencement à effet de ressort présente une courbe caractéristique aplatie.

2. Soupape de limitation de pression selon la revendication 1, caractérisée en ce que, en position de fermeture de la soupape (1), la zone extrême (24') des bords des ouvertures de sortie (27) des alésages radiaux (24) s'étend tout au plus jusqu'au milieu (30) du joint torique (8) précontraint.

3. Soupape de limitation de pression selon la revendication 1 ou 2, caractérisée en ce que la course (h1) du piston de soupape (3), comptée de sa position de fermeture jusqu'à la perte d'étanchéité, est d'environ 1 mm.

4. Soupape de limitation de pression selon les revendications 1, 2 ou 3, caractérisée en ce que la course (h4) du piston de soupape (3), comptée de sa position de fermeture jusqu'à sa position d'ouverture, est d'environ 3,5 mm.

5. Soupape de limitation selon les revendications 1 à 4, caractérisée en ce que la valeur de l'ajustement coulissant du piston de soupape (3) et de la paroi cylindrique (6) de la cage (2) est de h7/H7 additionné des tolérances d'usure correspondant aux calibres adaptés audit ajustement.

6. Soupape de limitation de pression selon les revendications 1 à 5, caractérisée en ce que l'ouverture de passage du piston de soupape (3), à l'intérieur de la cage de soupape (2) est munie d'un chanfrein (32) augmentant ladite ouverture de passage à la manière d'un entonnoir.

7. Soupape de limitation de pression selon la revendication 6, caractérisée en ce que le chanfrein (32) est de 0,5 mm × 90°.

8. Soupape de limitation de pression selon la revendication 6, caractérisée en ce que le chanfrein (32) est de 0,5 mm × 120°.

9. Soupape de limitation de pression selon les revendications 6 à 8, caractérisée en ce que l'épaisseur de paroi (d) comprise entre l'arête arrière (7") de la rainure annulaire (7), tournée vers le côté de sortie (26) de la cage de soupape (2), et le chanfrein (32) en forme d'entonnoir (32), est de 1,0 à 0,5 mm.

10. Soupape de limitation de pression selon les revendications 1 à 9, caractérisée en ce que le rapport de la section de l'alésage axial (22) du piston de soupape (3) sur la somme des sections de ses alésages radiaux (24) est d'environ 2:1.

11. Soupape de limitation de pression selon les revendications 1 à 10, caractérisée en ce que le piston de soupape (3) présente huit alésages radiaux (24).

12. Soupape de limitation de pression selon les revendications 1 à 11, caractérisée en ce que la cage de soupape (2, 5) est munie de quatre ouvertures radiales (14) et d'une ouverture axiale (15) pour l'évacuation du liquide sous pression.

13. Soupape de limitation de pression selon les revendications 1 à 12, caractérisée en ce qu'elle se compose d'un ensemble compacte constitué par la cage de soupape (2), le piston de soupape (3), le joint torique (8), la bague d'appui du ressort et le ressort (4).

14. Soupape de limitation de pression selon les revendications 1 à 13, caractérisée en ce que le joint torique (8) présente une dureté selon Shore d'au moins 100 Shore-A.

Fig.1

0 096 303

Fig.2

Fig.3

Fig.4